# EUROPEAN PATENT APPLICATION

(11) **EP 4 836 526 A1**
(43) Date of publication of application: **04.11.2026**
(21) Application number: 24911176.6
(22) Date of filing: 25.12.2024
(51) Int. Cl.: H04W 48/08

(54) **ACCESS METHOD AND APPARATUS, AND COMPUTER-READABLE STORAGE MEDIUM**

(30) Priority: 26.12.2023 CN 202311819356
(71) Applicant: Spreadtrum Communications (Shanghai) Co., Ltd., Shanghai 201203 (CN)
(72) Inventor: XU, Min, Shanghai 201203 (CN)
(74) Representative: Casalonga
(86) International application number: PCT/CN2024/142136
(87) International publication number: WO 2025/140252

(57) **Abstract**

Disclosed in the present application are an access method and apparatus, and a computer-readable storage medium. The method comprises: receiving first information, wherein the first information comprises auxiliary access information of at least one cell; and sending second information, wherein the second information is used for reporting one or more cells which are selected for access from among the at least one cell on the basis of the auxiliary access information. By means of the solution of the present disclosure, a multi-cell operation can be quickly established or recovered, thereby facilitating rapid activation of air interface resources, and accelerating data transmission between a terminal and a network.

## Description

The present application claims priority to CN Patent Application No. 202311819356.3, entitled "ACCESS METHOD AND APPARATUS, AND COMPUTER-READABLE STORAGE MEDIUM", and filed with the China National Intellectual Property Administration on December 26, 2023, the entirety of which is incorporated herein by reference.

### TECHNICAL FIELD

The present application relates to the field of communication technology, and particularly to an access method and apparatus, and computer-readable storage medium.

### BACKGROUND

In the prior art, a terminal measures signal strength of cells and selects an appropriate cell (e.g., a cell whose signal strength satisfies a condition) to camp on or access. Before initiating an access procedure, the terminal obtains system information of a target cell, which includes Random Access Channel (RACH) resources for access. The terminal selects a resource satisfying a condition and initiates a random access procedure in the target cell, through which a connection with the network is established. Subsequently, the network configures the terminal to perform measurements, and based on measurement results, the network configures the terminal to perform multi-carrier operations with multiple cells on different frequencies, or to perform Dual Connectivity (DC) operations with another base station cell, which may be collectively referred to as multi-cell operations (also referred to as multi-carrier cell).

In the case that the above access mechanism is applied to a Sixth-Generation mobile communications (6G) scenario, system information broadcast by a primary frequency cell includes RACH resources of the cell, and the terminal accesses the primary cell via the RACH resources and selects corresponding RACH resources to initiate a random access procedure. Subsequently, the network configures the terminal to perform measurements, wherein measurement targets may include multiple access point cells on other frequencies. Based on the measurement results, the network configures the terminal to perform multi-cell operations with multiple cells on different frequencies.

However, a user centric concept has been proposed in 6G network architectures. In 6G scenarios, multiple cells may provide services to a terminal, and the terminal is granted more autonomy in selection, allowing it to make choices based on its own services and requirements. Under such circumstances, how the terminal autonomously selects an appropriate access frequency cell (node) to rapidly establish or resume multi-cell operations and better meet user requirements is an urgent problem to be addressed.

### SUMMARY

The technical problem solved by the present application is how to rapidly establish or resume multi-cell operations.

To solve the above technical problem, embodiments of the present application provide an access method, comprising: receiving first information, the first information includes access assistance information of at least one cell; sending second information, the second information is used to report one or more cells selected for access from the at least one cell based on the access assistance information.

Optionally, the selecting, based on the access assistance information, one or more cells for access from the at least one cell comprises: selecting n cells with best measurement results for access from the at least one cell, wherein n is determined based on the access assistance information and/or terminal capability, and n is a positive integer.

Optionally, the access assistance information includes a threshold and frequency priorities of respective cells, and the selecting, based on the access assistance information, one or more cells for access from the at least one cell comprises: selecting, from the at least one cell, n cells for access whose measurement results satisfy the threshold and whose frequency priorities are ranked highest, wherein n is determined based on the access assistance information and/or terminal capability, and n is a positive integer.

Optionally, the access assistance information includes a quantity limit, and n is determined based on the quantity limit and/or terminal capability.

Optionally, the access assistance information includes at least one of: transmission reception point group information, a threshold, frequency priorities of cells, a quantity limit, and load information of cells.

Optionally, the transmission reception point group information is selected from: frequency list information, cell list information, transmission reception point identifier list information, and access point identifier list information.

Optionally, the load information is associated with the frequency priorities, and/or the frequency priorities are associated with services.

Optionally, the first information is carried in at least one of the following messages: system information, a state transition indication message, a radio resource control reconfiguration message, and a radio resource control connection release message.

Optionally, the first information further includes pre-configuration information of the at least one cell or indication information indicating retaining candidate cell configurations, the candidate cells being selected from the at least one cell, and the method further comprises: resuming multi-cell operations based on the pre-configuration information or the retained configuration information of the one or more cells selected for access.

Optionally, the first information is received from a wide-coverage cell, and the at least one cell is associated with the wide-coverage cell.

Optionally, the first information further includes random access resources respectively corresponding to the at least one cell, and sending the second information comprises: for each of the one or more cells selected for access, initiating random access in the cell using random access resources of the cell.

Optionally, the first information further includes at least one random access resource, wherein each random access resource corresponds to a combination of some cells in the at least one cell and/or beams, and sending the second information comprises: initiating random access in the cell sending the first information, by using random access resources corresponding to the one or more cells and/or beams selected for access.

Optionally, the second information is carried in at least one of the following messages: a radio resource control setup request message, a radio resource control resume request message, a radio resource control request setup complete message, and a radio resource control resume complete message, and the second information includes: the one or more cells selected for access and/or beams corresponding to the selected cells.

To solve the above technical problem, embodiments of the present application also provide an access method, comprising: sending first information, the first information includes access assistance information of at least one cell; receiving second information, the second information is used to report one or more cells selected for access from the at least one cell based on the access assistance information.

Optionally, the access assistance information includes at least one of: transmission reception point group information, a threshold, frequency priorities of cells, a quantity limit, and load information of cells.

Optionally, the transmission reception point group information is selected from: frequency list information, cell list information, transmission reception point identifier list information, and access point identifier list information.

Optionally, the load information is associated with the frequency priorities, and/or the frequency priorities are associated with services.

Optionally, the first information is carried in at least one of the following messages: system information, a state transition indication message, a radio resource control reconfiguration message, and a radio resource control connection release message.

Optionally, the first information further includes pre-configuration information of at least one cell or indication information indicating retaining candidate cell configurations, the candidate cells being selected from the at least one cell.

Optionally, the first information is received from a wide-coverage cell, and the at least one cell is associated with the wide-coverage cell.

Optionally, the first information further includes random access resources respectively corresponding to the at least one cell, and receiving the second information comprises: receiving synchronization information from the one or more cells selected for access, the synchronization information being used to synchronize the cell selection result of the terminal.

Optionally, the first information further includes at least one random access resource, wherein each random access resource corresponds to a combination of some cells in the at least one cell and/or beams, and receiving the second information comprises: receiving a random access request initiated using random access resources corresponding to the one or more cells and/or beams selected for access.

Optionally, the second information is carried in at least one of the following messages: a radio resource control setup request message, a radio resource control resume request message, a radio resource control request setup complete message, and a radio resource control resume complete message, and the second information includes: the one or more cells selected for access and/or beams corresponding to the selected cells.

To solve the above technical problem, embodiments of the present application further provide an access apparatus, comprising: a receiving module, configured to receive first information, the first information includes access assistance information of at least one cell; a sending module, configured to send second information, the second information is used to report one or more cells selected for access from the at least one cell based on the access assistance information.

To solve the above technical problem, embodiments of the present application further provide an access apparatus, comprising: a sending module, configured to send first information, the first information includes access assistance information of at least one cell; a receiving module, configured to receive second information, the second information is used to report one or more cells selected for access from the at least one cell based on the access assistance information.

To solve the above technical problem, embodiments of the present application further provide a computer-readable storage medium. The computer-readable storage medium is a non-volatile storage medium or a non-transitory storage medium, and a computer program is stored thereon. When executed by a processor, the computer program executes steps of the above method.

To solve the above technical problem, embodiments of the present application further provide an access apparatus, comprising a memory and a processor. The memory has stored thereon a computer program executable on the processor, and the processor executes the computer program to perform steps of the above method.

Compared with the prior art, the technical solutions of the embodiments of the present application have the following beneficial effects:
On the terminal side, embodiments of the present application provide an access method, comprising: receiving first information, the first information includes access assistance information of at least one cell; sending second information, the second information is used to report one or more cells selected for access from the at least one cell based on the access assistance information.

Compared with the prior art where a terminal can only select and report one cell for access, a terminal adopting the present solution can select one or more cells based on the access assistance information and report the selection result to the network. Thus, multi-cell operations can be rapidly established or resumed.

Furthermore, by reporting the selection result through an initial access procedure, multi-cell operations can be rapidly established or resumed. Furthermore, the selection result may include one or more frequencies or cells, and corresponding beam information.

Furthermore, for a terminal transitioning from an inactive state to an active state, through selection and reporting of multiple cells, a physical layer channel can be rapidly resumed, air interface resources can be activated, and data transmission with the network can be accelerated.

Furthermore, multi-cell operations are directly resumed based on the pre-configuration information and the selected cell(s), and the resumed cell(s) are reported to the network.

On the network side, embodiments of the present application provide an access method, comprising: sending first information, the first information includes access assistance information of at least one cell; receiving second information, the second information is used to report one or more cells selected for access from the at least one cell based on the access assistance information.

Compared with the prior art in which configuration information provided to a terminal only includes RACH resources of at least one cell, the present solution provides, in the first information, access assistance information including more information of at least one cell, so that the terminal can select, based on the access assistance information, one or more cells more suitable for its own situation for access. Thus, this helps the terminal rapidly establish or resume multi-cell operations.

### BRIEF DESCRIPTION OF THE DRAWINGS

FIG. 1 is a signaling interaction diagram of a four-step random access procedure provided in the present application;
FIG. 2 is a signaling interaction diagram of a two-step random access procedure provided in the present application;
FIG. 3 is a schematic diagram of a 6G networking architecture provided in the present application;
FIG. 4 is a flowchart of an access method according to a first embodiment of the present application;
FIG. 5 is a flowchart of an access method according to a second embodiment of the present application;
FIG. 6 is a signaling interaction diagram of accessing a network in a first typical use case of an embodiment of the present application;
FIG. 7 is a signaling interaction diagram of accessing a network in a second typical use case of an embodiment of the present application;
FIG. 8 is a signaling interaction diagram of accessing a network in a third typical use case of an embodiment of the present application;
FIG. 9 is a schematic structural diagram of an access apparatus according to a third embodiment of the present application;
FIG. 10 is a schematic structural diagram of an access apparatus according to a fourth embodiment of the present application.

### DETAILED DESCRIPTION OF EMBODIMENTS

As described in the Background, in order to better adapt to the characteristics of 6G communication scenarios where a user may have more autonomy and a terminal may connect to multiple cells, the existing network access mechanisms of 5G New Radio (NR, also referred to as New Radio) need to be enhanced.

Therefore, embodiments of the present application provide an access method, comprising: receiving first information, wherein the first information includes access assistance information of at least one cell; sending second information, the second information is used to report one or more cells selected for access from the at least one cell based on the access assistance information.

With the embodiments of this application, the terminal may select one or more cells based on the access assistance information and report the selection result to the network. Thus, multi-cell operations can be rapidly established or resumed.

Next, some basic concepts that may be involved in the embodiments of the present application are explained.

Regarding air interface states of a terminal: in 3GPP NR, a terminal has three states over the air interface: an RRC idle state (RRC_IDLE), an RRC inactive state (RRC_INACTIVE), and an RRC connected state (RRC_CONNECTED). A terminal in the idle state has no connection with a base station and only needs to periodically perform location updates, cell selection and reselection procedures, receive paging, and the like. A terminal in the connected state has a connection with the network, and the network configures the terminal with resource blocks (RBs) and physical layer configurations, including dual connectivity (DC) operations (in intra-frequency or inter-frequency scenarios, at least two cells being controlled by different gNBs), and the network may perform uplink and downlink data scheduling for the terminal. A terminal in the inactive state does not need to notify the base station when moving within a Radio Access Network (RAN)-based Notification Area (RNA), and the terminal retains certain configurations (currently, the terminal retains Packet Data Convergence Protocol (PDCP)/Service Data Adaptation Protocol (SDAP) configurations and some lower-layer configurations of the original serving cell (Primary Cell, PCell), but does not retain lower-layer SCG configurations). If the network needs to schedule the terminal or the terminal has data to send, the terminal needs to transition to the connected state and resume the retained configurations for data transmission.

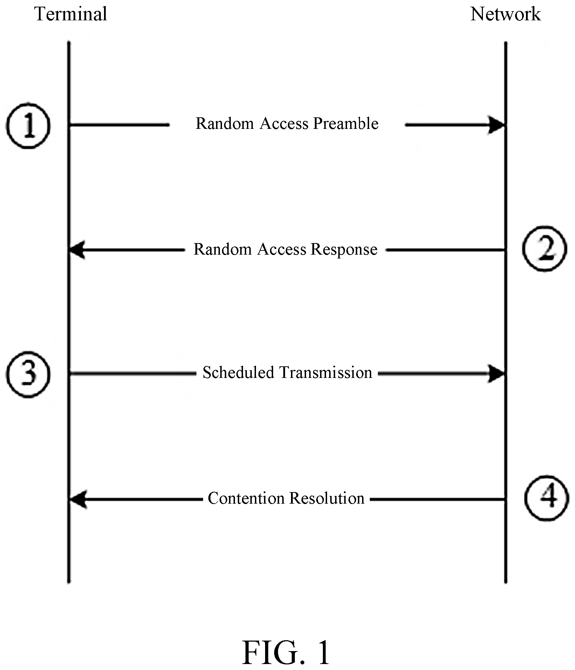

If a terminal in a non-connected state (including the idle state and the inactive state) needs to initiate data transmission, it needs to perform a random access procedure to transition to the connected state. Currently, there are four-step and two-step random access procedures:
Referring to FIG. 1, a four-step random access procedure may include:
Step 1: the terminal sends a Message 1 (Msg1), i.e., a Random Access Preamble (preamble sequence), to the network. From among Synchronization Signal/Physical Broadcast Channel Blocks (SS/PBCH Blocks, i.e., SSBs) or Channel State Information-Reference Signals (CSI-RS) satisfying a condition, the terminal selects one SSB or CSI-RS, then selects a preamble, and sends the random access preamble on an allowed PRACH Occasion (RO, a time-frequency resource).
Step 2: the terminal receives a Message 2 (Msg2), i.e., a Random Access Response (RAR), sent by the network. The terminal receives RAR data by detecting a Physical Downlink Control Channel (PDCCH) scrambled with a Random Access Radio Network Temporary Identity (RA-RNTI), the RAR data including a Timing Advance Command carrying Timing Advance (TA) information, an uplink grant (UL grant) carrying scheduling information for transmission of Message 3 (MSG3) by the terminal, and a Temporary Cell-RNTI (TC-RNTI) used for a terminal without a Cell-RNTI (C-RNTI) to receive a Message 4 (MSG4).Multiple terminals may select the same RO and the same preamble to initiate random access procedures, resulting in collisions, and the latter two steps are therefore used for contention resolution.
Step 3: the terminal sends Message 3 using the grant received in Message 2. For a terminal in a non-connected state, the terminal sends a Radio Resource Control (RRC) Common Control Channel (CCCH) message, such as RRCSetupRequest, RRCResumeRequest, or RRCResumeRequest1, wherein part of the information carried in the CCCH message is used as a UE Identity for contention resolution.
Step 4: the terminal receives a PDCCH using the TC-RNTI received in Message 3. If the received data carries a Contention Resolution ID Medium Access Control-Control Element (MAC-CE), the contention is considered to be successfully resolved.

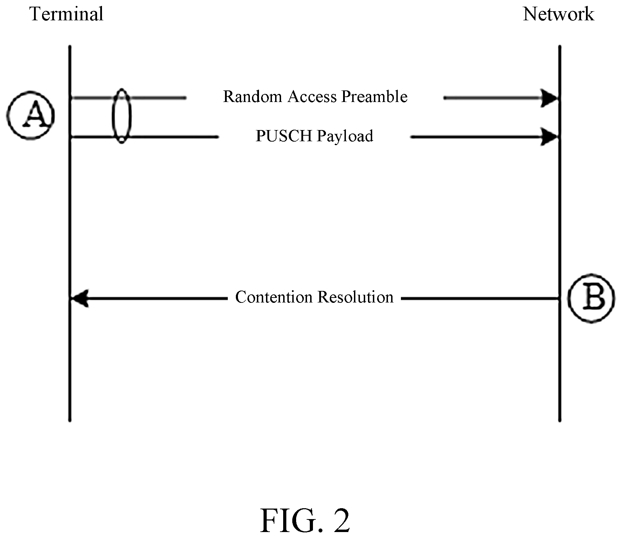

Referring to FIG. 2, in a two-step random access procedure, Message A (MSGA) includes information of Message 1 and Message 3 (e.g., in FIG. 1), i.e., a preamble sent on PRACH and a payload part sent on Physical Uplink Shared Channel (PUSCH); Message B (MSGB) includes information of Message 2 and Message 4.

If the network only receives preamble information sent by the terminal, it replies with a MAC RAR of the four-step random access procedure, and the terminal falls back to the four-step procedure. Since a terminal in the inactive state or the idle state first needs to perform a state transition if it needs to send data, Message A only includes an RRC message, and data can only be sent after completing the RACH procedure.

Regarding 6G networks (6G communications, 6G network architectures): a user centric network is a requirement of 6G network architectures, and user centricity means enabling a user to define, configure, and control network functions related to subscribed services. A user centric 6G network mainly satisfies users' high-speed transmission requirements through multiple transmission reception points (TRPs) or multiple access points (APs), and needs to reduce handovers and maintain continuous services.

A possible 6G network architecture is a CCU-DDU-AP architecture, wherein the architecture includes a Cloud Control Unit (CCU), a Distributed Data Unit (DDU), and an Access Point (AP). The architecture introduces:
1) Cloud Control Unit: providing management plane and control plane functions of the network. It includes traditional control plane functions, such as system information management related to Access Stratum (AS)/Non-Access Stratum (NAS) layer, establishment/maintenance/release of Radio Resource Control (RRC) connections, paging control, and security functions, including bearer management, mobility management, terminal measurement, reporting management, and NAS information transmission. The CCU also performs management plane functions in a User Centric Access Network (UCAN), such as terminal context management and AP management.
2) Distributed Data Unit: serving as an anchor point of a User Plane (UP), the Distributed Data Unit manages basic user plane functions.
3) AP: mainly responsible for antenna radio frequency transmission. Additionally, low-frequency TRPs are used to ensure wide coverage, and high-frequency TRPs are used to ensure service transmission.

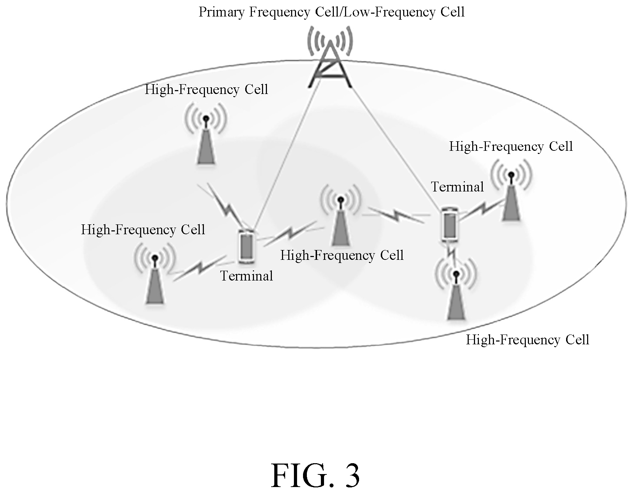

For a terminal, it may be connected to one or more APs when accessing a network to receive services. A possible 6G networking method includes low-frequency cells (APs) for wide coverage and high-frequency cells (APs) for service transmission, wherein a frequency cell for wide coverage may be referred to as a primary frequency cell, as shown in FIG. 3.In FIG. 3, areas filled with different shades indicate signal coverage ranges of high-frequency cells/low-frequency cells.

Optimizations of system information in 6G may include: through a system information pooling operation, pooling System Information (SI) of a physical resource pool including multiple carrier links and transmitting the pooled SI on one carrier, so that the primary frequency cell can assist in sending system information of other frequency cells. Alternatively, in combination with existing NR 5G approaches, a cell only broadcasts a part of system information, and a terminal may request a base station to broadcast another part of the system information, i.e., in a broadcast + on-demand form.

There may be only one RRC connected state in a 6G network. In the RRC connected state, based on whether a stable physical layer channel exists, the connected state is divided into a non-active state or an active state, both being sub-states of the RRC connected state.

Non-active state: i.e., a terminal power saving state. The network and the terminal mainly maintain a security context and a bearer context, and possibly a complete Data Radio Bearer (DRB) configuration. There is no fixed physical layer channel between the terminal and the network, i.e., the terminal does not maintain fixed active air interface resources with a specific DDU/TRP. When transmission needs to be initiated, a specific DDU/TRP needs to be activated; for rapid transmission, physical layer configurations of the TRP may also be pre-configured, and activated on demand.

Active state: i.e., a state in which the terminal can perform continuous data transmission. A user context is maintained. The terminal maintains a user physical layer channel with the network, and maintains active air interface resources/physical layer configurations with one or more specific DDUs/TRPs. Flexible cells are formed and flexible cell management is performed only in the active state.

In order to make the aforementioned objectives, features, and beneficial effects of the present application more comprehensible, the specific embodiments of the present application are described in detail below with reference to the accompanying drawings.

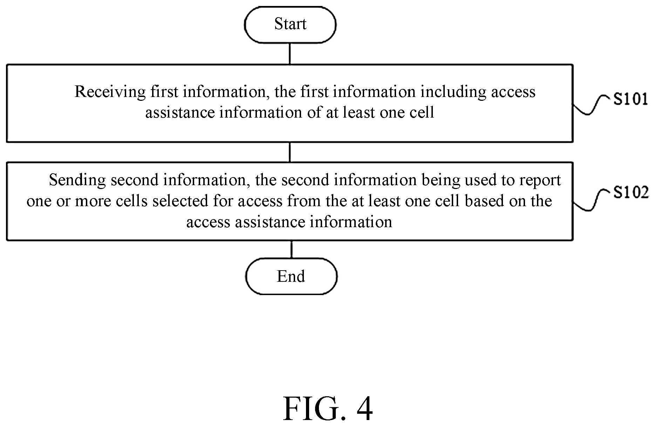

FIG. 4 is a flowchart of an access method according to a first embodiment of the present application.

The present embodiment may be applied to a 5G NR scenario or a 6G communication scenario.

In specific implementations, the access method provided by steps S101 to S102 below may be executed by a chip with an access function in a terminal, or by a baseband chip of the terminal.

A terminal executing the present embodiment may be in a 6G non-active state or a non-connected state, wherein the non-connected state includes a 5G RRC idle state (RRC_IDLE) and an RRC inactive state (RRC_INACTIVE).

Specifically, referring to FIG. 4, the access method of the present embodiment may include the following steps:
Step S101, receiving first information, the first information includes access assistance information of at least one cell;
Step S102, sending second information, the second information is used to report one or more cells selected for access from the at least one cell based on the access assistance information.

More specifically, the access assistance information may include at least one of: transmission reception point (TRP) group information, a threshold, frequency priorities of cells, a quantity limit, and load information of cells. Frequency refers to a frequency of a cell, and an access priority of the cell is indicated through a frequency priority. For example, the terminal preferentially selects a cell with a high frequency priority for access. The quantity limit is used to determine a maximum quantity of one or more cells that the terminal may select.

Furthermore, the TRP group information may be selected from: frequency list information, cell list information, TRP identifier list information, and Access Point (AP) identifier list information.

In some embodiments, the load information may be associated with the frequency priorities. For example, a cell with a low load corresponds to a high frequency priority, and the terminal may preferentially select the cell for access. Thereby, the load information of cells may be reflected through the frequency priorities.

In some embodiments, the frequency priorities may be associated with services. For example, services with different latency requirements may correspond to cells with different frequency priorities, such as a service with strict latency requirements corresponding to a cell with a high frequency priority. As another example, a cell on a specific frequency may be configured for a terminal and dedicated to supporting a service with strict latency requirements.

In some embodiments, the quantity limit may be associated with the load information. For example, the greater the load of at least one cell, the smaller the value of the quantity limit may be set. The terminal may select a smaller number of one or more cells for access.

In some embodiments, the quantity limit may be associated with services. For example, in the case that the terminal has a large amount of service data, the quantity limit may be appropriately set to a larger value, so that the terminal can select a greater number of one or more cells for access, accelerating data transmission.

In a specific implementation, the first information may be carried in at least one of the following messages: system information, a state switching indication message, an RRC reconfiguration message, and an RRC connection release message.

Specifically, the state transition indication message may be used to indicate the terminal to transition from a connected state to a non-connected state.

In a specific implementation, the first information may be received from a wide-coverage cell, and the at least one cell is associated with the wide-coverage cell.

Specifically, a wide-coverage cell may broadcast system information of other cells in a related area. For example, a base station of the wide-coverage cell may acquire system information of other cells through inter-base station interfaces, back-end configuration (e.g., operator configuration), and the like, and broadcast the acquired system information.

Furthermore, an association relationship between the other cells and the wide-coverage cell may be pre-configured. For example, a high-frequency cell within a signal coverage range of the wide-coverage cell may be determined to have an association relationship with the wide-coverage cell.

Furthermore, RACH resources broadcast in the first information may be resources respectively configured by at least one cell and carried in system information. The wide-coverage cell indicates, through the first information to the terminal, RACH resources respectively configured by at least one cell. The terminal selects a cell for access as needed, and accesses the cell using RACH resources configured by the cell.

Alternatively, RACH resources broadcast in the first information may be resources configured by the wide-coverage cell. The terminal accesses the wide-coverage cell and then reports one or more selected cells.

In a specific implementation, a process of selecting, from the at least one cell based on the access assistance information, one or more cells for access may specifically include: selecting, from the at least one cell, n cells with best measurement results for access, wherein n is determined based on the access assistance information and/or terminal capability, and n is a positive integer.

Specifically, the terminal may make the selection based on related configurations in the first information and measurement results. Furthermore, the terminal may further make the selection in combination with terminal capability or service requirements.

For example, the terminal may select the first n frequencies or cells with the best measurement results.

Furthermore, n may be determined based on the quantity limit and/or terminal capability. For example, n may be greater than a quantity limit configured by the network through the first information, or not greater than a quantity supported by the terminal capability, or a combination thereof. Thereby, the terminal may determine a specific value of n as needed, thereby reducing power consumption. In another implementation, the terminal may determine n based on service requirements, for example: in the case that the terminal has a large amount of service data, n may be selected to be greater than the quantity limit configured by the network through the first information, and the terminal subsequently notifies the network of the selected n.

In a variant embodiment, a process of selecting one or more cells for access from the at least one cell based on the access assistance information may specifically include: selecting, from the at least one cell, n cells for access whose measurement results satisfy a threshold and whose frequency priorities are the highest, wherein n is determined based on the access assistance information and/or terminal capability, and n is a positive integer.

For example, the terminal may measure reference signals (RS) of each cell of at least one cell, and select the first n frequencies or cells with the highest priorities from among those whose Reference Signal Received Power (RSRP) satisfies the threshold.

In a specific implementation, the first information may further include pre-configuration information of at least one cell or indication information indicating retaining candidate cell configurations, the candidate cells being selected from the at least one cell.

Specifically, in a message for transitioning from a connected state or an active state to a non-connected state or an inactive state, the network may send pre-configuration information of candidate cells (including cells on different frequencies, which may be cells previously connected during multi-cell operations in the connected state), or previously maintained configurations of candidate cells (referring to cells that currently do not provide service and to which the terminal may handover in the future) may be retained by the terminal after transitioning to the non-connected state or the inactive state.

Accordingly, the method of the present embodiment may further include the step of: resuming multi-cell operations based on pre-configuration information or retained configuration information of one or more cells selected for access.

For example, after selecting one or more cells for access using the selection mechanism described in the above embodiment, the terminal may directly resume corresponding configurations in the selected cell(s) according to the pre-configuration information or the retained configurations, and report the finally selected cell(s) to the base station.

Furthermore, the base station to which the report is sent may be a base station of the wide-coverage cell or a base station of a cell selected for access. If the report is sent to the base station of the cell selected for access, the base station of the cell selected for access may synchronize access information of the terminal to the base station of the wide-coverage cell.

In some embodiments, in addition to the aforementioned parameters that may be included in the first information, the pre-configuration information may further include physical layer information of cells (e.g., candidate cells), bearer configuration information, mobility-related information, and the like. Accordingly, candidate cells may reserve resources for terminal access.

In some embodiments, the base station of the wide-coverage cell may carry pre-configuration information in a state transition indication message, and indicate, in an RRC connection release message, retention of configurations of candidate cells. In response to receiving an RRC connection release message, the terminal may retain the first information after transitioning to a non-connected state or an inactive state.

In some embodiments, the base station of the wide-coverage cell may also directly carry pre-configuration information in an RRC connection release message.

In a specific implementation, in step S102, the selected one or more cells may be reported through respective initiation of access in the selected one or more cells based on an initial access procedure.

Specifically, the first information may further include random access resources (i.e., RACH resources) respectively corresponding to at least one cell. Furthermore, different random access resources may correspond to different beams.

Accordingly, step S102 may include: for each of the one or more cells selected for access, initiating random access in the cell using random access resources of the cell. In the first information, the base station of the wide-coverage cell configures different random access resources for different beams of cells on different frequencies. Based on the configuration, the terminal initiates n random access procedures in n selected cells on different frequencies, and for different frequencies, uses different beams corresponding to different random access resources.

For example, the first information includes the following configurations: RACH resource 1 corresponds to frequency 1 + beam 1, RACH resource 2 corresponds to frequency 1 + beam 2, RACH resource 3 corresponds to frequency 2 + beam 1, and RACH resource 4 corresponds to frequency 2 + beam 2. Assuming the terminal selects frequency 1 + beam 1 and frequency 2 + beam 1, the terminal needs to initiate a random access procedure using beam 1 of cell 1 (corresponding to frequency 1) on frequency 1, and to initiate a random access procedure using beam 1 of cell 2 (corresponding to frequency 2) on frequency 2.

In a specific implementation, in step S102, frequencies and/or beam information of one or more selected cells may be reported to the network by initiating random access with a centralized control node based on an initial access procedure. The centralized control node may be, for example, a base station sending the first information, e.g., a base station of the wide-coverage cell.

Specifically, the first information may further include at least one random access resource, where each random access resource corresponds to a combination of some cells of at least one cell and/or beams. For example, RACH1 represents a cell on frequency 1 + beam 2, RACH2 represents a cell on frequency 1, and RACH3 represents a cell on frequency 2.

Accordingly, step S102 may include: initiating random access in the cell sending the first information, by using random access resources corresponding to the one or more cells and/or beams selected for access.

For example, assuming RACH resource 1 of the wide-coverage cell represents beam 1 of the wide-coverage cell + beam 1 of cell 2, in the case that the terminal uses RACH resource 1 to initiate a random access procedure in the wide-coverage cell, it indicates that cell 2 and beam 1 of cell 2 are selected.

Furthermore, in response to receiving the second information, the base station of the wide-coverage cell may synchronize a cell selection result of the terminal to the cell(s) selected for access, and indicate how these cell(s) should schedule the terminal. Continuing with the example where RACH resource 1 of the wide-coverage cell represents beam 1 of the wide-coverage cell + beam 1 of cell 2, in response to receiving the random access procedure initiated by the terminal using RACH resource 1, the base station of the wide-coverage cell instructs the base station of cell 2 to schedule the terminal on beam 1.

In some embodiments, the random access resources include time-frequency resources and random access preambles, wherein different random access preambles correspond to combinations of different cells and/or beams.

In a specific implementation, the second information may be carried in at least one of the following messages: a radio resource control setup request message, a radio resource control resume request message, a radio resource control request setup complete message, and a radio resource control resume complete message.

Furthermore, the second information may include: the one or more cells selected for access and/or beams corresponding to the selected cell(s). That is, the terminal may indicate selected frequency (frequencies) and beam index (indices) in a request setup or resume message, or a request setup complete or resume complete message.

For example, after accessing using RACH resources of the wide-coverage cell (indicating the current wide-coverage cell and corresponding beam, without including information of other selected cell(s)), the terminal reports other selected cell(s) and beam(s) through a corresponding message.

As described above, with the present embodiment, the terminal may select one or more cells based on the access assistance information and report the selection result to the network. Thus, multi-cell operations can be rapidly established or resumed. Furthermore, by reporting the selection result through an initial access procedure, multi-cell operations can be rapidly established or resumed. Furthermore, the selection result may include one or more frequencies or cells, and corresponding beam information. Furthermore, for a terminal transitioning from an inactive state to an active state, through selection and reporting of multiple cells, a physical layer channel can be rapidly resumed, air interface resources can be activated, and data transmission with the network can be accelerated. Furthermore, multi-cell operations are directly resumed based on the pre-configuration information and the selected cell(s), and the resumed cell(s) are reported to the network.

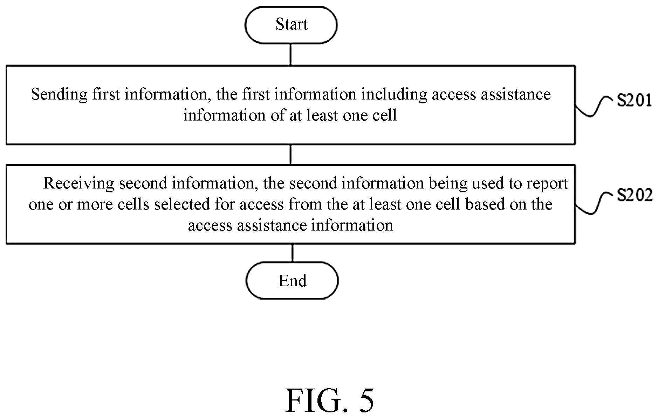

FIG. 5 is a flowchart of an access method according to a second embodiment of the present application.

The present embodiment may be applied to a 5G NR scenario or a 6G communication scenario.

In specific implementations, the access method provided by steps S201 to S202 below may be executed by a chip with an access function in a network device, or by a baseband chip of the network device. The network device may include a base station, such as a base station of a wide-coverage cell.

Specifically, referring to FIG. 5, the access method of the present embodiment may include the following steps:
Step S201: sending first information, the first information includes access assistance information of at least one cell;
Step S202: receiving second information, the second information is used to report one or more cells selected for access from the at least one cell based on the access assistance information.

It will be understood by those skilled in the art that steps S201 to S202 may be regarded as execution steps corresponding to steps S101 to S102 of the embodiment shown in FIG. 4, and the two are complementary in specific implementation principles and logic. Therefore, explanations of terms involved in the present embodiment may refer to related descriptions of the embodiment shown in FIG. 4, which will not be repeated here.

In a specific implementation, the first information includes RACH resources of at least one cell, and the terminal may initiate a random access procedure directly in the selected cell(s) using RACH resources of the selected cell(s). Accordingly, step S202 may include: receiving synchronization information from the one or more cells selected for access, the synchronization information being used to synchronize the cell selection result of the terminal.

In a specific implementation, the first information may include at least one RACH resource, where each RACH resource corresponds to a combination of some cells of at least one cell and/or beams. Accordingly, step S202 may include: receiving a random access request initiated using random access resources corresponding to the one or more cells and/or beams selected for access. Furthermore, the base station of the wide-coverage cell may synchronize the cell selection result to the selected cell(s), to instruct the selected cell(s) to schedule the terminal using the selected beam(s).

As described above, with the present embodiment, access assistance information including more information of at least one cell is provided in the first information, so that the terminal can select, based on the access assistance information, one or more cells that are more suitable for its own situation for access. Thus, this helps the terminal rapidly establish or resume multi-cell operations.

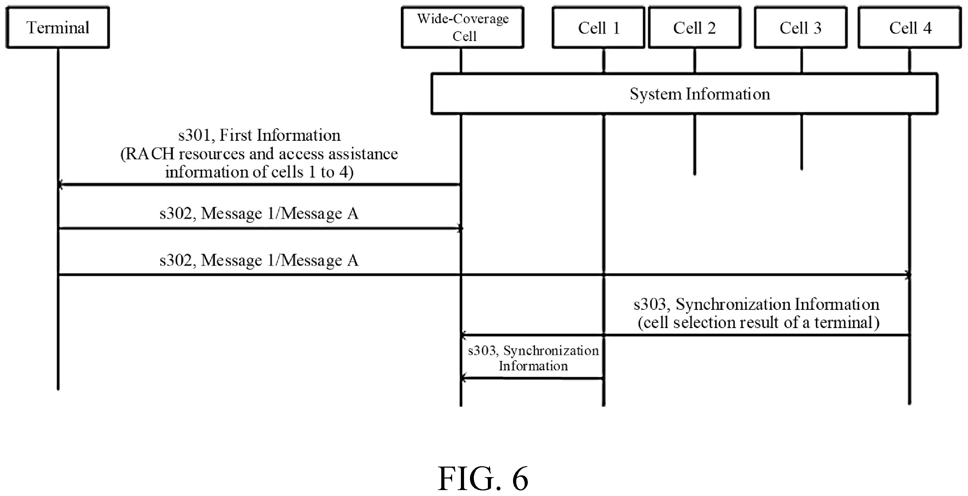

In a typical use case, referring to FIG. 6, a terminal may execute steps of the embodiment shown in FIG. 4, and a base station of a wide-coverage cell may execute steps of the embodiment shown in FIG. 5.The wide-coverage cell may be associated with cells 1 to 4, where cells 1 to 4 may be high-frequency cells.

Specifically, cells 1 to 4 may broadcast system information respectively, the system information including RACH resources and access assistance information of respective cells.

Furthermore, the wide-coverage cell performs operation s301, broadcasting first information. The first information includes RACH resources and access assistance information of cells 1 to 4.

In response to receiving the first information, the terminal selects cell(s) for access based on measurement results and access assistance information of cells 1 to 4. Assuming that the access assistance information includes a quantity limit of 3, the terminal may select the first 2 cells with the highest measurement results (assumed to be cell 1 and cell 4) for access.

Assuming that RACH resource 1 configured for cell 1 corresponds to beam 1, and RACH resource 2 configured for cell 4 corresponds to beam 2. The terminal performs operation s302, initiating a random access procedure using RACH resource 1 on beam 1 of cell 1, and initiating a random access procedure using RACH resource 2 on beam 2 of cell 4, respectively. In this example, the initiated procedure may be a four-step random access procedure or a two-step random access procedure; therefore, Message 1 or Message A may be sent in operation s302.

Furthermore, cell 1 and cell 4 may respectively perform operation s303 to send synchronization information to the wide-coverage cell, informing that the terminal has selected to access the respective cell.

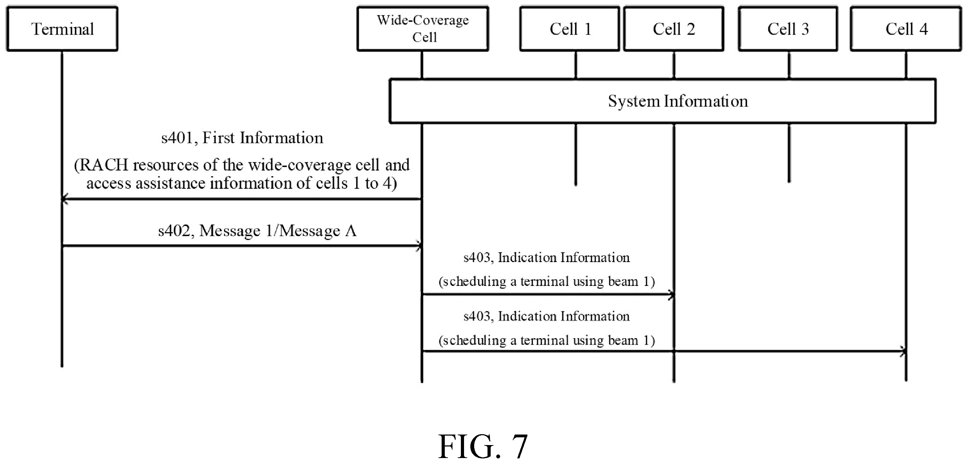

In a typical use case, referring to FIG. 7, a terminal may execute steps of the embodiment shown in FIG. 4, and a base station of a wide-coverage cell may execute steps of the embodiment shown in FIG. 5.The wide-coverage cell may be associated with cells 1 to 4, where cells 1 to 4 may be high-frequency cells.

Specifically, cells 1 to 4 may broadcast system information respectively, the system information including access assistance information of respective cells.

Furthermore, the wide-coverage cell performs operation s401, broadcasting first information. The first information includes RACH resources of the wide-coverage cell, and further includes access assistance information of cells 1 to 4.

In response to receiving the first information, the terminal selects cell(s) for access based on measurement results and access assistance information of cells 1 to 4. Assuming that a quantity limit configured in the access assistance information is 4 and the terminal capability is 3, the terminal may select the first 2 cells with the highest measurement results (assumed to be cell 2 and cell 4) for access.

Assuming that RACH resource 1 configured for the wide-coverage cell corresponds to cell 2 and beam 3, RACH resource 5 corresponds to cell 4 and beam 1, and RACH resource 6 corresponds to cell 2 + cell 4 and beam 1.The terminal performs operation s402, initiating a random access procedure in the wide-coverage cell using RACH resource 6.In this example, the initiated procedure may be a four-step random access procedure or a two-step random access procedure; therefore, Message 1 or Message A may be sent in operation s402.

In response to receiving Message 1 or Message A, while continuing the random access procedure with the terminal, the wide-coverage cell may also perform operation s403 to instruct cell 2 and cell 4 to schedule the terminal using beam 1 of their respective cells.

In a variant embodiment, Message 1 or Message A sent in operation s402 may not include a cell selection result. After successfully accessing the wide-coverage cell based on the random access procedure, the terminal may indicate one or more cells selected for access and/or beams corresponding to the selected cell(s) in an RRC setup request message, an RRC resume request message, an RRC request setup complete message, or an RRC resume complete message.

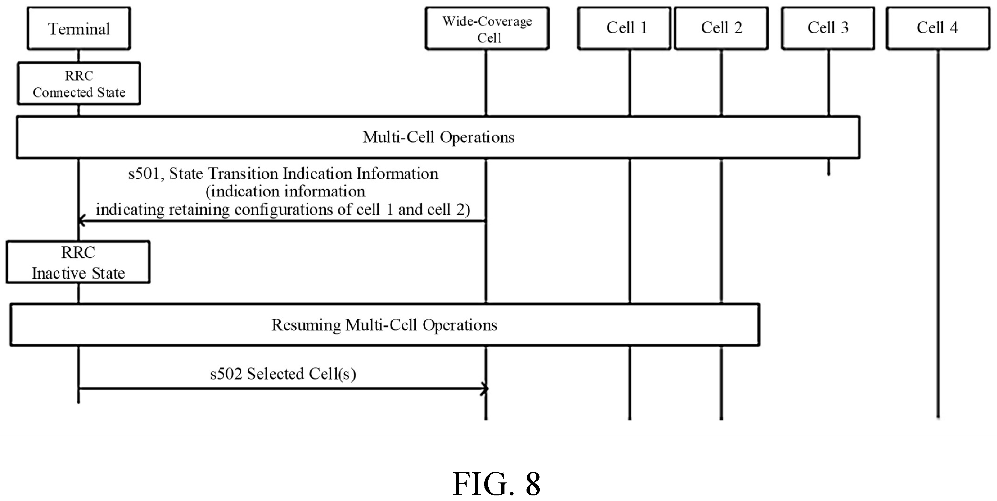

In a typical use case, referring to FIG. 8, a terminal may execute steps of the embodiment shown in FIG. 4, and a base station of a wide-coverage cell may execute steps of the embodiment shown in FIG. 5.The wide-coverage cell may be associated with cells 1 to 4, where cells 1 to 4 may be high-frequency cells.

The terminal may originally be in an RRC connected state and perform multi-cell operations with the wide-coverage cell, cell 1, cell 2, and cell 3.

Furthermore, the wide-coverage cell may perform operation s501 to send a state transition indication message, instructing the terminal to transition from the RRC connected state to an inactive state (inactive or non-active). Moreover, the state transition indication message may further include indication information indicating retaining configurations of cell 1 and cell 2.

In response to receiving the state transition indication message, the terminal transitions to the inactive state. Moreover, the terminal retains related information of cell 1 and cell 2.

Furthermore, when needed, the terminal may directly restore corresponding configurations in selected cells (assumed to be cell 1 and cell 2) based on measurement results of cell 1 and cell 2, service requirements, and/or terminal capability.

Furthermore, the terminal may perform operation s502 to report selected cell(s) to the wide-coverage cell.

In a variant embodiment, the state transition indication message sent in operation s501 may further include pre-configuration information of cell 4.When selecting, the terminal may make a comprehensive selection based on measurement results of retained cells 1 to 3 and measurement results of the configured cell 4, and determine the cell(s) for access this time.

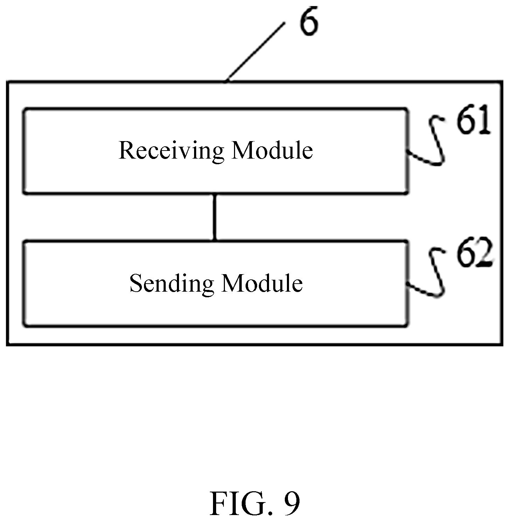

FIG. 9 is a schematic structural diagram of an access apparatus 6 according to a third embodiment of the present application. It will be understood by those skilled in the art that the access apparatus 6 of the present embodiment may be used to implement the method solution described in the embodiment shown in FIG. 4.

Specifically, referring to FIG. 9, the access apparatus 6 of the present embodiment may include: a receiving module 61, configured to receive first information, the first information includes access assistance information of at least one cell; a sending module 62, configured to send second information, the second information is used to report one or more cells selected for access from the at least one cell based on the access assistance information.

For more details about a working principle and working manner of the access apparatus 6, reference may be made to related descriptions in FIG. 4, which will not be repeated herein.

In specific implementations, the above access apparatus 6 may correspond to a chip having a communication function in a terminal, or a chip having a data processing function, such as a System-on-a-Chip (SoC), a baseband chip, and the like; or a chip module in a terminal, the chip module including a chip having a communication function; or a chip module having a chip with a data processing function; or a terminal.

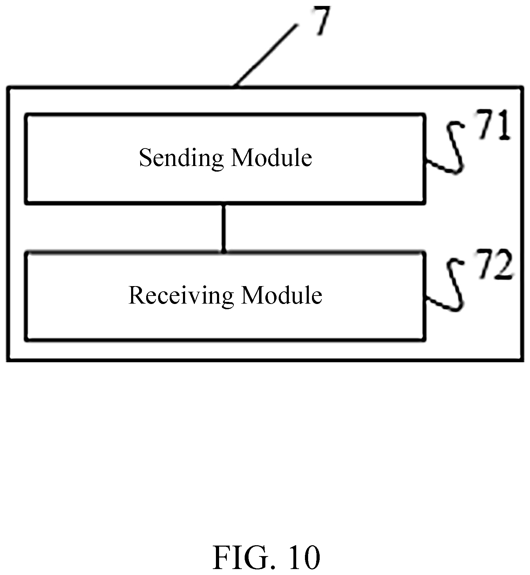

FIG. 10 is a schematic structural diagram of an access apparatus 7 according to a fourth embodiment of the present application. It will be understood by those skilled in the art that the access apparatus 7 of the present embodiment may be used to implement the method solution described in the embodiment shown in FIG. 5.

Specifically, referring to FIG. 10, the access apparatus 7 of the present embodiment may include: a sending module 71, configured to send first information, the first information includes access assistance information of at least one cell; a receiving module 72, configured to receive second information, the second information is used to report one or more cells selected for access from the at least one cell based on the access assistance information.

For more details about a working principle and working manner of the access apparatus 7, reference may be made to related descriptions in FIG. 5, which will not be repeated herein.

In specific implementations, the above access apparatus 7 may correspond to a chip having a communication function in a network device, or a chip having a data processing function, such as a System-on-a-Chip (SOC), a baseband chip, and the like; or a chip module in a network device, the chip module including a chip having a communication function; or a chip module having a chip with a data processing function; or a network device.

In specific implementations, regarding the various modules/units included in each device/product described in the above embodiments, they may be software modules/units, hardware modules/units, or partly software modules/units and partly hardware modules/units.

For example, for apparatuses or products applied to or integrated into a chip, each module/unit included may be implemented in hardware such as circuits, or at least some modules/units may be implemented in software programs executing on a processor integrated into the chip, and the remaining (if any) modules/units may be implemented in hardware such as circuits; for apparatuses or products applied to or integrated into a chip module, each module/unit included may be implemented in hardware such as circuits, and different modules/units may be located in the same component (e.g., chip, circuit module, etc.) or different components of the chip module, or at least some modules/units may be implemented in software programs executing on a processor integrated into the chip module, and the remaining (if any) modules/units may be implemented in hardware such as circuits; for apparatuses or products applied to or integrated into a termina, each module/unit included may be implemented in hardware such as circuits, different modules/units may be located in the same component (e.g., chip, circuit module, etc.) or different components of the terminal device, or at least some modules/units may be implemented by software programs executing on a processor integrated into the terminal device, and the remaining (if any) modules/units may be implemented in hardware such as circuits.

Embodiments of the present application further provide a computer-readable storage medium, wherein the computer-readable storage medium is a non-volatile storage medium or a non-transitory storage medium, and a computer program is stored thereon. When executed by a processor, the computer program performs steps of the access method provided in any of the foregoing embodiments. Preferably, the storage medium may include computer-readable storage media such as non-volatile memory or non-transitory memory. The storage medium may include ROM, RAM, magnetic disk, or optical disk, etc.

An embodiment of the present application further provides an access apparatus, including a memory and a processor. The memory has stored thereon computer programs executable on the processor. The computer programs, when being executed by the processor, performs the steps of the access method provided in the embodiment corresponding to FIG. 4.The access apparatus may be integrated into a terminal, or may be, for example, a terminal.

An embodiment of the present application further provides an access apparatus, including a memory and a processor. The memory has stored thereon computer programs executable on the processor. The computer programs, when being executed by the processor, performs the steps of the access method provided in the embodiment corresponding to FIG. 5.The access apparatus may be integrated into a network device, or may be, for example, a network device.

The wireless communication systems mentioned in the embodiments of the present application include, but are not limited to: a Narrowband Internet of Things (NB-IoT) system, an Enhanced Data Rate for GSM Evolution (EDGE) system, a Wideband Code Division Multiple Access (WCDMA) system, a Code Division Multiple Access 2000 (CDMA2000) system, a Time Division Synchronous Code Division Multiple Access (TD-SCDMA) system, a Long Term Evolution (LTE) system, a fifth-generation mobile communication system, or possible sixth-generation and seventh-generation mobile communication systems, a vehicular wireless short-range communication system, and future mobile communication systems.

The technical solutions of the present application may also be applied to different network architectures, including but not limited to a relay network architecture, a dual-connectivity architecture, a Vehicle-to-Everything architecture, etc.

In the embodiments of the present application, a base station (BS), also referred to as base station equipment, is an apparatus deployed in a radio access network (RAN) to provide wireless communication functions.For example, a device providing base station functions in a 2G network includes a base transceiver station (BTS); a device providing base station functions in a 3G network includes a NodeB; a device providing base station functions in a 4G network includes an evolved NodeB (eNB); a device providing base station functions in a wireless local area network (WLAN) is an access point (AP); and a device providing base station functions in 5G New Radio (NR) includes a gNB and a next-generation evolved NodeB (ng-eNB), where the gNB communicates with a terminal using NR technology, the ng-eNB communicates with a terminal using E-UTRA (Evolved Universal Terrestrial Radio Access) technology, and both the gNB and the ng-eNB may be connected to a 5G core network. The base station in the embodiments of the present application also encompasses a device providing functions of a base station in future new communication systems, etc.

The base station controller in the embodiments of the present application is an apparatus for managing base stations. For example, the base station controller may be a base station controller (BSC) in a 2G network, a radio network controller (RNC) in a 3G network, or an apparatus for controlling and managing base stations in a future new communication system.

In embodiments of the present application, the network side (network) refers to a communication network providing communication services to terminals, including base stations of a radio access network, and may also include base station controllers of the radio access network and devices on the core network side.

The terminal in the embodiments of the present application may refer to various forms of a user equipment (UE), an access terminal, a subscriber unit, a subscriber station, a mobile station, a mobile station (MS), a remote station, a remote terminal, a mobile device, a user terminal, a terminal equipment, a wireless communication device, a user agent, or a user apparatus. The terminal equipment/terminal device may also be a cellular phone, a cordless phone, a Session Initiation Protocol (SIP) phone, a Wireless Local Loop (WLL) station, a Personal Digital Assistant (PDA), a handheld device with wireless communication function, a computing device, or other processing devices connected to a wireless modem, an in-vehicle device, a wearable device, a terminal equipment/terminal device in a future 5G network, or a terminal equipment/terminal device in a future evolved Public Land Mobile Network (PLMN), etc., which does not propose limitation on the embodiments of the present application. The unidirectional communication link from an access network to a terminal is defined as downlink in the embodiments of the present application, data transmitted on the downlink is defined as downlink data, and the transmission direction of the downlink data is defined as downlink direction. The unidirectional communication link from a terminal to an access network is defined as uplink in the embodiments of the present application, data transmitted on the uplink is defined as uplink data, and the transmission direction of the uplink data is defined as uplink direction.

It should be understood that the term "and/or" as used herein is merely a description of the relation of related objects, indicating three types of relations. For example, A and/or B may indicate: A alone, both A and B, and B alone.In addition, the character "/" in the specification indicates that the related objects before and after it are in an "or" relationship.

The term "a plurality of" in the embodiments of the present application means two or more.

The descriptions such as first and second in the embodiments of the present application are for purposes of illustration and distinguishing of the described objects, there is no sequential order, and do not represent any special limitation on the number of devices in the embodiments of the present application, and may not constitute any limitation on the embodiments of the present application.

The term "connection" as used in the embodiments of the present application refers to various forms of connection which enables communication between devices, such as direct connection or indirect connection. The embodiments of the present application do not pose limitation thereon.

Although the present application is disclosed as above, the present application is not limited thereto. Any person skilled in the art may make various changes and modifications without departing from the spirit and scope of the present application. Therefore, the protection scope of the present application shall be subject to the scope defined by the claims.

## Claims

1. An access method, **characterized in that**, the access method comprises:
receiving first information, wherein the first information includes access assistance information of at least one cell;
sending second information, wherein the second information is used to report one or more cells selected for access from the at least one cell based on the access assistance information.

2. The access method according to claim 1, **characterized in that**, the selecting, based on the access assistance information, one or more cells for access from the at least one cell comprises:
selecting n cells with best measurement results for access from the at least one cell, wherein n is determined based on the access assistance information and/or terminal capability, and n is a positive integer.

3. The access method according to claim 1, **characterized in that**, the access assistance information includes a threshold and frequency priorities of respective cells, and the selecting, based on the access assistance information, one or more cells for access from the at least one cell comprises:
selecting, from the at least one cell, n cells for access whose measurement results satisfy the threshold and whose frequency priorities are ranked highest, wherein n is determined based on the access assistance information and/or terminal capability, and n is a positive integer.

4. The access method according to claim 2 or 3, **characterized in that**, the access assistance information includes a quantity limit, and n is determined based on the quantity limit and/or terminal capability.

5. The access method according to any one of claims 1 to 4, **characterized in that**, the access assistance information includes at least one of: transmission reception point group information, a threshold, frequency priorities of cells, a quantity limit, and load information of cells.

6. The access method according to claim 5, **characterized in that**, the transmission reception point group information is selected from: frequency list information, cell list information, transmission reception point identifier list information, and access point identifier list information.

7. The access method according to claim 5, **characterized in that**, the load information is associated with the frequency priorities, and/or, the frequency priorities are associated with services.

8. The access method according to any one of claims 1 to 7, **characterized in that**, the first information is carried in at least one of the following messages: system information, a state transition indication message, a radio resource control reconfiguration message, and a radio resource control connection release message.

9. The access method according to claim 8, **characterized in that**, the first information further includes pre-configuration information of the at least one cell or indication information indicating retaining candidate cell configurations, the candidate cells being selected from the at least one cell, and the method further comprises:
resuming multi-cell operations based on the pre-configuration information or the retained configuration information of the one or more cells selected for access.

10. The access method according to any one of claims 1 to 9, **characterized in that**, the first information is received from a wide-coverage cell, and the at least one cell is associated with the wide-coverage cell.

11. The access method according to any one of claims 1 to 10, **characterized in that**, the first information further includes random access resources respectively corresponding to the at least one cell, and the sending second information comprises:
for each of the one or more cells selected for access, initiating random access in the cell using random access resources of the cell.

12. The access method according to any one of claims 1 to 10, **characterized in that**, the first information further includes at least one random access resource, wherein each random access resource corresponds to a combination of some cells in the at least one cell and/or beams, and the sending second information comprises:
initiating random access in the cell sending the first information, by using random access resources corresponding to the one or more cells and/or beams selected for access.

13. The access method according to any one of claims 1 to 10, **characterized in that**, the second information is carried in at least one of the following messages: a radio resource control setup request message, a radio resource control resume request message, a radio resource control request setup complete message, and a radio resource control resume complete message, and the second information includes: the one or more cells selected for access and/or beams corresponding to the selected cells.

14. An access method, **characterized in that**, the access method comprises:
sending first information, wherein the first information includes access assistance information of at least one cell;
receiving second information, wherein the second information is used to report one or more cells selected for access from the at least one cell based on the access assistance information.

15. The access method according to claim 14, **characterized in that**, the access assistance information includes at least one of: transmission reception point group information, a threshold, frequency priorities of cells, a quantity limit, and load information of cells.

16. The access method according to claim 15, **characterized in that**, the transmission reception point group information is selected from: frequency list information, cell list information, transmission reception point identifier list information, and access point identifier list information.

17. The access method according to claim 15, **characterized in that**, the load information is associated with the frequency priorities, and/or, the frequency priorities are associated with services.

18. The access method according to any one of claims 14 to 17, **characterized in that**, the first information is carried in at least one of the following messages: system information, a state transition indication message, a radio resource control reconfiguration message, and a radio resource control connection release message.

19. The access method according to claim 18, **characterized in that**, the first information further includes pre-configuration information of the at least one cell or indication information indicating retaining candidate cell configurations, the candidate cells being selected from the at least one cell.

20. The access method according to any one of claims 14 to 19, **characterized in that**, the first information is received from a wide-coverage cell, and the at least one cell is associated with the wide-coverage cell.

21. The access method according to any one of claims 14 to 20, **characterized in that**, the first information further includes random access resources respectively corresponding to the at least one cell, and the receiving second information comprises:
receiving synchronization information from the one or more cells selected for access, wherein the synchronization information is used to synchronize a cell selection result of a terminal.

22. The access method according to any one of claims 14 to 20, **characterized in that**, the first information further includes at least one random access resource, wherein each random access resource corresponds to a combination of some cells in the at least one cell and/or beams, and the receiving second information comprises:
receiving a random access request initiated using random access resources corresponding to the one or more cells and/or beams selected for access.

23. The access method according to any one of claims 14 to 20, **characterized in that**, the second information is carried in at least one of the following messages: a radio resource control setup request message, a radio resource control resume request message, a radio resource control request setup complete message, and a radio resource control resume complete message, and the second information includes: the one or more cells selected for access and/or beams corresponding to the selected cells.

24. An access apparatus, **characterized in that**, the access apparatus comprises:
a receiving module, configured to receive first information, wherein the first information includes access assistance information of at least one cell;
a sending module, configured to send second information, wherein the second information is used to report one or more cells selected for access from the at least one cell based on the access assistance information.

25. An access apparatus, **characterized in that**, the access apparatus comprises:
a sending module, configured to send first information, wherein the first information includes access assistance information of at least one cell;
a receiving module, configured to receive second information, wherein the second information is used to report one or more cells selected for access from the at least one cell based on the access assistance information.

26. A computer-readable storage medium, the computer-readable storage medium being a non-volatile storage medium or a non-transitory storage medium, having a computer program stored thereon, **characterized in that**, the computer program, when executed by a processor, causes the steps of the method according to any one of claims 1 to 23 to be performed.

27. An access apparatus, comprising a memory and a processor, wherein the memory stores thereon computer programs executable on the processor, **characterized in that** the computer programs, when executed by the processor, cause the steps of the method according to any one of claims 1 to 23 to be performed.
